# FASCICULE DE BREVET EUROPEEN

(11) **EP 4 396 040 B1**
(45) Date de publication et mention de la délivrance du brevet: **17.09.2025**
(21) Numéro de dépôt: 22769722.4
(22) Date de dépôt: 30.08.2022
(51) Int. Cl.: B60R 13/02, B60D 1/60, B62D 25/24

(54) **PANNEAU DE GARNISSAGE DE VÉHICULE AUTOMOBILE**
KRAFTFAHRZEUGVERKLEIDUNGSPLATTE
MOTOR VEHICLE TRIM PANEL

(30) Priorité: 30.08.2021 FR 2109024
(43) Date de publication de la demande: 10.07.2024
(73) Titulaire: TREVES PRODUCTS, SERVICES & INNOVATION, 75008 Paris (FR)
(72) Inventeur: POTHIER, Marc, 75008 Paris (FR); VITRANT, Olivier, 75008 Paris (FR)
(74) Mandataire: Sayettat, Julien Christian
(86) Numéro de dépôt international: PCT/EP2022/074127
(87) Numéro de publication internationale: WO 2023/031228

(56) Documents cités:
- EP-A1- 3 059 144
- DE-A1- 10 340 154
- FR-A1- 2 589 406
- FR-A1- 2 955 054
- FR-A1- 3 064 564

## Description

L'invention concerne un panneau de garnissage de véhicule automobile.

Il est connu de réaliser un panneau de garnissage de véhicule automobile, ledit panneau étant pourvu d'une ouverture occultable par une trappe, ladite trappe étant actionnable entre une position fermée et une position ouverte, ladite trappe mise en position fermée définissant une fente définissant de part et d'autre deux bordures disposées respectivement sur ladite trappe et en périphérie de ladite ouverture, ledit panneau étant en outre pourvu d'au moins un loquet rotatif actionnable entre une position déverrouillée et une position verrouillée verrouillant ladite trappe en position fermée, ledit loquet étant formé par une première plaque montée en rotation autour d'un axe en face d'aspect dudit panneau sur une desdites bordures formant bordure de support, l'autre desdites bordures formant bordure libre.

Un état de la technique correspondant au préambule de la revendication indépendante est divulgué par le document FR 2 955 054 A1.

Un tel panneau est par exemple un panneau de carénage d'un dessous de caisse ou un panneau de garnissage de compartiment à bagages, ou encore tout autre panneau de garnissage intérieur ou extérieur d'un véhicule.

Le fait de pourvoir le panneau d'une ouverture occultable par une trappe permet par exemple des opérations de maintenance, de réparation ou de réglage sur des organes placés entre la caisse et le panneau, et ceci sans avoir à démonter ledit panneau ; ou encore, la trappe peut servir à accéder à un espace de rangement.

Une telle trappe doit pouvoir être manipulée aisément et aussi être fermement maintenue fermée et verrouillée sans s'ouvrir inopportunément, par exemple, dans le cas d'un panneau de carénage sous caisse, en cas de choc appliqué à ladite trappe lors d'un passage de trottoir.

Dans certains cas, le matériau constitutif de la trappe peut présenter une rigidité en flexion médiocre, ledit matériau étant par exemple un matériau fibreux thermo-comprimé.

Il en résulte que la trappe peut, sous l'effet d'un effort appliqué dessus, se dégager inopportunément de son état verrouillé et se retrouver en position ouverte.

L'invention a pour but de pallier cet inconvénient.

A cet effet, l'invention propose un panneau de garnissage de véhicule automobile, ledit panneau étant pourvu d'une ouverture occultable par une trappe, ladite trappe étant actionnable entre une position fermée et une position ouverte, ladite trappe mise en position fermée définissant une fente définissant de part et d'autre deux bordures disposées respectivement sur ladite trappe et en périphérie de ladite ouverture, ledit panneau étant en outre pourvu d'au moins un loquet rotatif actionnable entre une position déverrouillée et une position verrouillée verrouillant ladite trappe en position fermée, ledit loquet étant formé par une première plaque montée en rotation autour d'un axe en face d'aspect dudit panneau sur une desdites bordures formant bordure de support, l'autre desdites bordures formant bordure libre, ledit panneau présentant en outre les caractéristiques suivantes :
- une deuxième plaque est montée en regard de ladite première plaque en face d'envers de ladite bordure de support,
- chacune desdites plaques présente une portion périphérique en arc de cercle centré sur ledit axe, les deux portions périphériques se faisant face quand ledit loquet est en position verrouillée,
- l'une desdites plaques est pourvue d'une gorge s'étendant le long de sa portion périphérique et l'autre desdites plaques est pourvue d'un bossage s'étendant le long de sa portion périphérique,
- ladite bordure libre est pourvue d'un embouti de verrouillage en arc de cercle de même centre et de même rayon que les arcs de cercle dans lesquels s'inscrivent lesdites portions périphériques,
- quand ledit loquet est mis en position verrouillée, ledit embouti est pris en contact ajusté entre ladite gorge et ledit bossage, de manière à empêcher un déverrouillage de ladite trappe.

Par la notion de contact ajusté, on entend un contact où la gorge et le bossage viennent épouser généralement la forme de l'embouti de verrouillage.

En d'autres termes la gorge et le bossage viennent prendre « en sandwich » l'embouti de verrouillage.

De la sorte, on empêche un mouvement de la trappe en glissement radial - ce terme étant pris en référence à l'axe de rotation du loquet - par rapport aux plaques.

Ainsi, la trappe, même présentant une médiocre rigidité en flexion, ne peut se dégager de son état de verrouillage quand elle est soumise à déformation, le loquet étant fermement maintenu en position verrouillée.

D'autres particularités et avantages de l'invention apparaîtront dans la description qui suit, faite en référence aux figures jointes, dans lesquelles :
[Fig.1] est une vue générale schématique en perspective partielle d'un panneau vu vers la face d'aspect selon une réalisation, la trappe étant en position ouverte,
[Fig.2] est une vue schématique en perspective partielle éclatée de deux plaques selon un mode de réalisation,

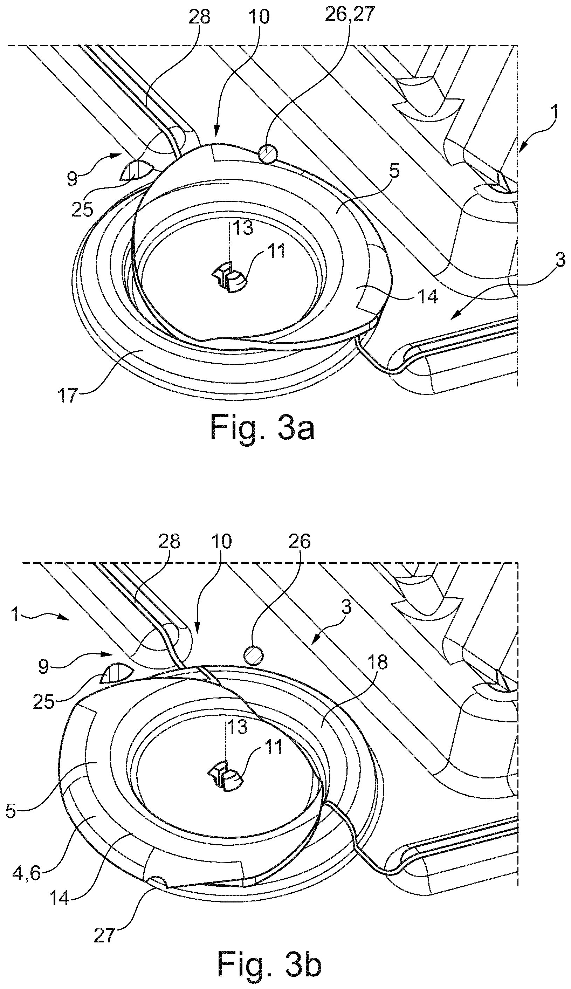

[Fig.3a] et
   [Fig.3b] sont des vues schématiques partielles, en perspective vue par la face d'envers, d'un panneau selon un mode de réalisation, ledit panneau intégrant les plaques de la figure 2, le loquet étant en position verrouillée (figure 3a) et déverrouillée (figure 3b),

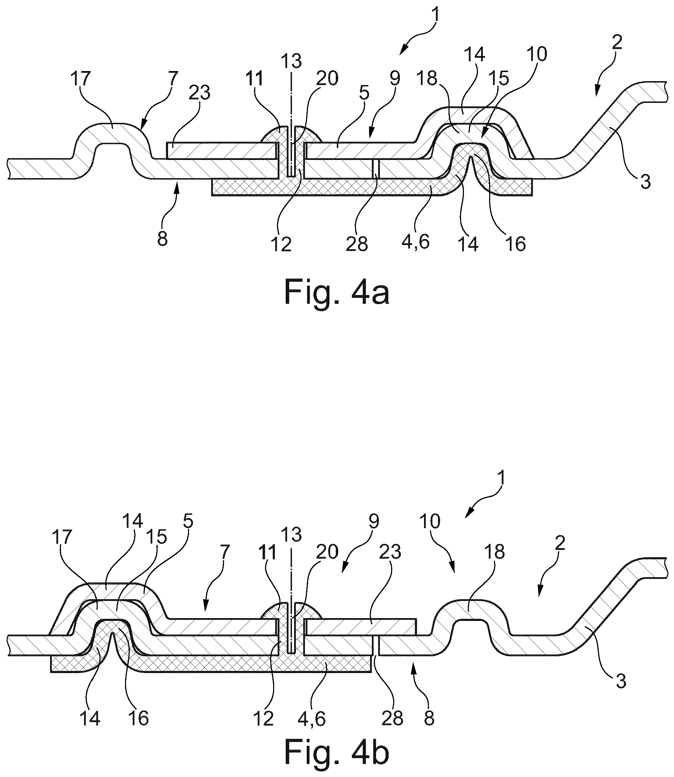

[Fig.4a] et
   [Fig.4b] sont des vues en coupe correspondant respectivement aux figures 3a et 3b.

On décrit à présent, en référence aux figures, un panneau 1 de garnissage de véhicule automobile, ledit panneau étant pourvu d'une ouverture 2 occultable par une trappe 3, ladite trappe étant actionnable entre une position fermée et une position ouverte, ladite trappe mise en position fermée définissant une fente 28 définissant de part et d'autre deux bordures 10 et 9 disposées respectivement sur ladite trappe et en périphérie de ladite ouverture, ledit panneau étant en outre pourvu d'au moins un loquet 4 rotatif actionnable entre une position déverrouillée et une position verrouillée verrouillant ladite trappe en position fermée, ledit loquet étant formé par une première plaque 6 montée en rotation autour d'un axe 13 en face d'aspect 8 dudit panneau sur une desdites bordures formant bordure de support 9, l'autre desdites bordures formant bordure libre 10, ledit panneau présentant en outre les caractéristiques suivantes :
- une deuxième plaque 5 est montée en regard de ladite première plaque en face d'envers 7 de ladite bordure de support,
- chacune desdites plaques présente une portion périphérique 14 en arc de cercle centré sur ledit axe, les deux portions périphériques 14 se faisant face quand ledit loquet est en position verrouillée,
- l'une desdites plaques - ici la deuxième plaque 5 - est pourvue d'une gorge 15 s'étendant le long de sa portion périphérique 14 et l'autre desdites plaques - ici la première plaque 6 - est pourvue d'un bossage 16 s'étendant le long de sa portion périphérique 14,
- ladite bordure libre est pourvue d'un embouti de verrouillage 18 en arc de cercle de même centre et de même rayon que les arcs de cercle dans lesquels s'inscrivent lesdites portions périphériques,
- quand ledit loquet est mis en position verrouillée, ledit embouti est pris en contact ajusté entre ladite gorge et ledit bossage, de manière à empêcher un déverrouillage de ladite trappe.

Bien entendu, il peut être prévu, selon une réalisation non représentée, que le loquet 4 soit monté sur la bordure 10 faisant alors office de bordure de support, l'autre bordure 9 faisant office de bordure libre.

Selon une réalisation non représentée, la deuxième plaque 5 est montée de manière fixe en face d'envers 7, sa portion périphérique 14 faisant saillie à l'intérieur de l'ouverture 2.

Selon la réalisation représentée :
- les première 6 et deuxième 5 plaques sont reliées fixement l'une à l'autre par un moyen de liaison 11 traversant un orifice 12 prévu dans la bordure de support 9 et centré sur l'axe 13, de sorte que ladite deuxième plaque tourne avec ladite première plaque lors de la mise en rotation du loquet 4,
- ladite bordure de support est pourvue d'un embouti de coulissement 17 en arc de cercle, la mise de la trappe 3 en position fermée réalisant une mise en prolongement dudit embouti de coulissement avec l'embouti de verrouillage 18 pour former un embouti global en forme générale de cercle de même centre et de même rayon que les arcs de cercle dans lesquels s'inscrivent les portions périphériques 14, de manière à permettre la rotation dudit loquet vers sa position déverrouillée.

Selon divers modes de réalisation, le moyen de liaison 11 est formé au choix :
- par un harpon issu d'une des plaques - ici la première plaque 6 -, ledit harpon traversant l'orifice 12 et s'ancrant dans un logement 20 prévu dans l'autre desdites plaques - ici la deuxième plaque 5 -,
- ou par une bouterolle.

Selon le mode de réalisation représenté, la deuxième plaque 5 s'étend dans l'ouverture 2 par une saillie 23 quand le loquet 4 est en position déverrouillée, de sorte que la trappe 3 mise en position fermée prenne appui sur ladite saillie pour positionner correctement ledit loquet en vue de son actionnement en position verrouillée.

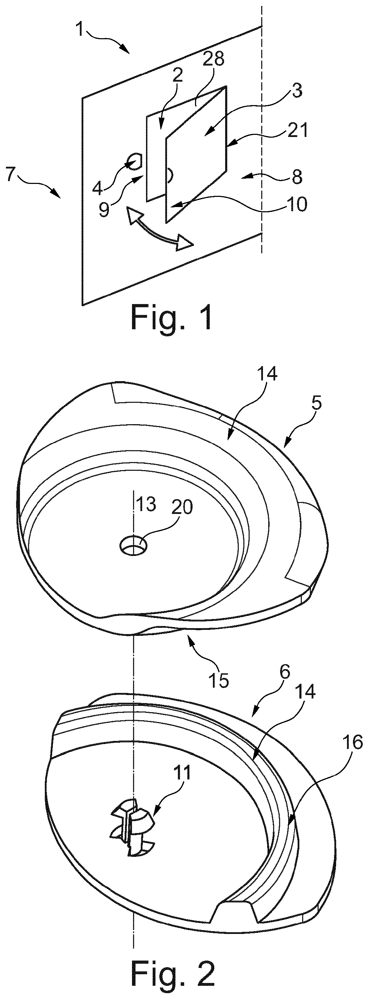

Selon la réalisation représentée en figure 1, la trappe 3 est sous forme d'un volet monté en rotation par une charnière 21 - obtenue par exemple par amincissement localisé du matériau du panneau 1 quand la trappe 3 est issue de matière dudit panneau - au reste dudit panneau, au moins un loquet 4 étant disposé selon une bordure opposée - ici la bordure 9 - à celle supportant ladite charnière.

Selon une réalisation non représentée, la première plaque 6 est pourvue d'un moyen de préhension pour faciliter sa mise en rotation manuelle, ledit moyen étant par exemple sous forme de nervures ou de pattes saillant radialement.

Selon la réalisation représentée, une des bordures - ici la bordure 9 - est pourvue d'un bossage de limitation de course 25 venant, selon la position verrouillée ou déverrouillée dans laquelle est mise le loquet 4, en butée contre une extrémité ou l'autre de la portion périphérique 14 d'une des plaques - ici la deuxième plaque 5 -, de manière limiter la rotation dudit loquet à un demi-tour et à lui imposer un sens d'actionnement en verrouillage et en déverrouillage.

Selon la réalisation représentée, une des bordures - ici la bordure 10 - est pourvue d'un bossage de blocage 26 prenant appui, avant la fin de course du loquet 4 pour l'amener en position verrouillée, sur le bord externe de la portion périphérique 14 d'une des plaques - ici la deuxième plaque 5 -, ledit bossage s'insérant dans une encoche 27 prévue sur ledit bord une fois ledit loquet mis en position verrouillée de manière à le bloquer dans ladite position, ceci par principe de passage par un « point dur ».

Selon la réalisation représentée, les extrémités des portions périphériques 14 d'au moins une des plaques 5,6 sont biseautées, de manière à faciliter le coulissement desdites plaques contre les emboutis 17,18 lors de l'actionnement du loquet 4.

## Revendications

1. Panneau (1) de garnissage de véhicule automobile, ledit panneau étant pourvu d'une ouverture (2) occultable par une trappe (3), ladite trappe étant actionnable entre une position fermée et une position ouverte, ladite trappe mise en position fermée définissant une fente (28) définissant de part et d'autre deux bordures (10, 9) disposées respectivement sur ladite trappe et en périphérie de ladite ouverture, ledit panneau étant en outre pourvu d'au moins un loquet (4) rotatif actionnable entre une position déverrouillée et une position verrouillée verrouillant ladite trappe en position fermée, ledit loquet étant formé par une première plaque (6) montée en rotation autour d'un axe (13) en face d'aspect (8) dudit panneau sur une desdites bordures formant bordure de support (9), l'autre desdites bordures formant bordure libre (10), ledit panneau étant **caractérisé en ce que** :
• une deuxième plaque (5) est montée en regard de ladite première plaque en face d'envers (7) de ladite bordure de support,
• chacune desdites plaques présente une portion périphérique (14) en arc de cercle centré sur ledit axe, les deux portions périphériques (14) se faisant face quand ledit loquet est en position verrouillée,
• l'une desdites plaques (5) est pourvue d'une gorge (15) s'étendant le long de sa portion périphérique (14) et l'autre desdites plaques (6) est pourvue d'un bossage (16) s'étendant le long de sa portion périphérique (14),
• ladite bordure libre est pourvue d'un embouti de verrouillage (18) en arc de cercle de même centre et de même rayon que les arcs de cercle dans lesquels s'inscrivent lesdites portions périphériques,
• quand ledit loquet est mis en position verrouillée, ledit embouti est pris en contact ajusté entre ladite gorge et ledit bossage, de manière à empêcher un déverrouillage de ladite trappe.

2. Panneau selon la revendication 1, **caractérisé en ce que** la deuxième plaque (5) est montée de manière fixe en face d'envers (7), sa portion périphérique (14) faisant saillie à l'intérieur de l'ouverture (2).

3. Panneau selon la revendication 1, **caractérisé en ce que** :
• les première (6) et deuxième (5) plaques sont reliées fixement l'une à l'autre par un moyen de liaison (11) traversant un orifice (12) prévu dans la bordure de support (9) et centré sur l'axe (13), de sorte que ladite deuxième plaque tourne avec ladite première plaque lors de la mise en rotation du loquet (4),
• ladite bordure de support est pourvue d'un embouti de coulissement (17) en arc de cercle, la mise de la trappe (3) en position fermée réalisant une mise en prolongement dudit embouti de coulissement avec l'embouti de verrouillage (18) pour former un embouti global en forme générale de cercle de même centre et de même rayon que les arcs de cercle dans lesquels s'inscrivent les portions périphériques (14), de manière à permettre la rotation dudit loquet vers sa position déverrouillée.

4. Panneau selon la revendication 3, **caractérisé en ce que** le moyen de liaison (11) est formé au choix :
• par un harpon issu d'une des plaques (6), ledit harpon traversant l'orifice (12) et s'ancrant dans un logement (20) prévu dans l'autre desdites plaques (5),
• ou par une bouterolle.

5. Panneau selon l'une des revendications 3 ou 4, **caractérisé en ce que** la deuxième plaque (5) s'étend dans l'ouverture (2) par une saillie (23) quand le loquet (4) est en position déverrouillée, de sorte que la trappe (3) mise en position fermée prenne appui sur ladite saillie pour positionner correctement ledit loquet en vue de son actionnement en position verrouillée.

6. Panneau selon l'une quelconque des revendications précédentes, **caractérisé en ce que** la trappe (3) est sous forme d'un volet monté en rotation par une charnière (21) au reste dudit panneau, au moins un loquet (4) étant disposé selon une bordure opposée (9) à celle supportant ladite charnière.

7. Panneau selon l'une quelconque des revendications précédentes, **caractérisé en ce que** la première plaque (6) est pourvue d'un moyen de préhension pour faciliter sa mise en rotation manuelle.

8. Panneau selon l'une quelconque des revendications précédentes, caractérisé en qu'une des bordures (9) est pourvue d'un bossage de limitation de course (25) venant, selon la position verrouillée ou déverrouillée dans laquelle est mise le loquet (4), en butée contre une extrémité ou l'autre de la portion périphérique (14) d'une des plaques (5), de manière limiter la rotation dudit loquet à un demi-tour et à lui imposer un sens d'actionnement en verrouillage et en déverrouillage.

9. Panneau selon l'une quelconque des revendications précédentes, **caractérisé en ce qu'**une des bordures (10) est pourvue d'un bossage de blocage (26) prenant appui, avant la fin de course du loquet (4) pour l'amener en position verrouillée, sur le bord externe de la portion périphérique (14) d'une des plaques (5), ledit bossage s'insérant dans une encoche (27) prévue sur ledit bord une fois ledit loquet mis en position verrouillée de manière à le bloquer dans ladite position.

10. Panneau selon l'une quelconque des revendications précédentes, **caractérisé en ce que** les extrémités des portions périphériques (14) d'au moins une des plaques (5,6) sont biseautées, de manière à faciliter le coulissement desdites plaques contre les emboutis (17,18) lors de l'actionnement du loquet (4).

## Patentansprüche

1. Platte (1) zur Kraftfahrzeugverkleidung, wobei die Platte mit einer Öffnung (2) versehen ist, die durch eine Klappe (3) verdeckbar ist, wobei die Klappe zwischen einer geschlossenen und einer offenen Position betätigbar ist, wobei die in die geschlossene Position gebrachte Klappe einen Schlitz (28) definiert, der zu beiden Seiten zwei Ränder (10, 9) definiert, die jeweils an der Klappe und am Umfang der Öffnung angeordnet sind, die Platte ferner mit mindestens einem drehbaren Riegel (4) versehen ist, der zwischen einer entriegelten Position und einer verriegelten Position betätigbar ist, der die Klappe in der geschlossenen Position verriegelt, wobei der Riegel durch eine erste Scheibe (6) gebildet ist, die um eine Achse (13) drehbar in der Seitenfläche (8) der Platte an einem der Ränder, die einen Stützrand (9) bilden, montiert ist, der andere der Ränder einen freien Rand (10) bildet, wobei die Platte **dadurch gekennzeichnet ist, dass**:
• eine zweite Scheibe (5) gegenüber der ersten Scheibe an der Rückseite (7) des Stützrands montiert ist,
• jede der Scheiben einen bogenförmigen Umfangsabschnitt (14) aufweist, der auf der Achse zentriert ist, wobei die zwei Umfangsabschnitte (14) einander zugewandt sind, wenn der Riegel in der verriegelten Position ist,
• eine der Scheiben (5) mit einer Nut (15) versehen ist, die sich entlang ihres Umfangsabschnitts (14) erstreckt, und die andere der Scheiben (6) mit einem Vorsprung (16) versehen ist, der sich entlang ihres Umfangsabschnitts (14) erstreckt,
• der freie Rand mit einer kreisbogenförmigen Verriegelungsansatz (18) versehen ist, die denselben Mittelpunkt und denselben Radius wie die Kreisbögen aufweist, in denen die Randabschnitte liegen,
• wenn der Riegel in die verriegelte Position gebracht wird, der Vorsprung zwischen der Nut und dem Vorsprung in einen passenden Kontakt gebracht wird, um ein Entriegeln der Klappe zu verhindern.

2. Platte nach Anspruch 1, **dadurch gekennzeichnet, dass** die zweite Scheibe (5) fest an der Rückseite (7) montiert ist, wobei ihr Umfangsabschnitt (14) in die Öffnung (2) hervorsteht.

3. Platte nach Anspruch 1, **dadurch gekennzeichnet, dass**:
• die erste (6) und zweite (5) Scheibe durch eine Verbindungseinrichtung (11), die eine Öffnung (12) durchquert, die in dem Stützrand (9) bereitgestellt und auf der Achse (13) zentriert ist, fest miteinander verbunden sind, sodass die zweite Scheibe mit der ersten Scheibe dreht, wenn der Riegel (4) in Drehung versetzt wird,
• der Stützrand mit einem bogenförmigen Gleitansatz (17) versehen ist, wobei das Bringen der Klappe (3) in die geschlossene Position eine Verlängerung des Gleitansatzes mit dem Verriegelungsansatz (18) durchführt, um einen globalen Ansatz in allgemeiner Kreisform zu bilden, der denselben Mittelpunkt und denselben Radius wie die Kreisbögen aufweist, in denen die Umfangsabschnitte (14) liegen, um die Drehung des Riegels in seine entriegelte Position zu ermöglichen.

4. Platte nach Anspruch 3, **dadurch gekennzeichnet, dass** das Verbindungseinrichtungen (11) wahlweise gebildet ist durch:
• eine Harpune, die aus einer der Scheiben (6), wobei die Harpune die Öffnung (12) durchquert und sich in einer Aufnahme (20) verankert, der in der anderen der Scheiben (5) bereitgestellt ist,
• oder einen Stempel.

5. Platte nach einem der Ansprüche 3 oder 4, **dadurch gekennzeichnet, dass** sich die zweite Scheibe (5) mit einem Vorsprung (23) in die Öffnung (2) erstreckt, wenn der Riegel (4) in der entriegelten Position ist, sodass die in die geschlossene Position gebrachte Klappe (3) an dem Vorsprung anliegt, um den Riegel für seine Betätigung in der verriegelten Position korrekt zu positionieren.

6. Platte nach einem der vorhergehenden Ansprüche, **dadurch gekennzeichnet, dass** die Klappe (3) in Form einer Klappe ist, die über ein Scharnier (21) drehbar am Rest der Platte montiert ist, mindestens ein Riegel (4) entlang eines Rands (9) angeordnet ist, der jenem gegenüberliegt, der das Scharnier trägt.

7. Platte nach einem der vorhergehenden Ansprüche, **dadurch gekennzeichnet, dass** die erste Scheibe (6) mit einem Greifmittel versehen ist, um ihre manuelle Drehung zu erleichtern.

8. Platte nach einem der vorhergehenden Ansprüche, **dadurch gekennzeichnet, dass** einer der Ränder (9) mit einem Wegbegrenzungsvorsprung (25) versehen ist, der je nach verriegelter oder entriegelter Position, in die der Riegel (4) gebracht wird, an das eine oder andere Ende des Umfangsabschnitts (14) einer der Scheiben (5) anstößt, um die Drehung des Riegels auf eine halbe Umdrehung zu begrenzen und ihm eine Betätigungsrichtung beim Verriegeln und Entriegeln vorzugeben.

9. Platte nach einem der vorhergehenden Ansprüche, **dadurch gekennzeichnet, dass** einer der Ränder (10) mit einem Arretiervorsprung (26) versehen ist, der vor der Endlage des Riegels (4) an dem Außenrand des Umfangsabschnitts (14) einer der Scheiben (5) in Anlage kommt, um ihn in die verriegelte Position zu bringen, wobei der Vorsprung in eine Kerbe (27) eingefügt wird, die an dem Rand bereitgestellt ist, nachdem der Riegel in die verriegelte Position gebracht wurde, um ihn in dieser Position zu arretieren.

10. Platte nach einem der vorhergehenden Ansprüche, **dadurch gekennzeichnet, dass** die Enden der Umfangsabschnitte (14) von mindestens einer der Scheiben (5, 6) abgeschrägt sind, um das Gleiten der Scheiben gegen die Ansätze (17, 18) bei der Betätigung des Riegels (4) zu erleichtern.

## Claims

1. Panel (1) for trimming a motor vehicle, said panel being provided with an opening (2) that can be closed off by a hatch (3), said hatch being operable between a closed position and an open position, said hatch in the closed position defining a slot (28) defining on either side thereof two edges (10, 9) arranged respectively on said hatch and around the periphery of said opening, said panel also being provided with at least one rotary catch (4) operable between an unlocked position and a locked position for locking said hatch in the closed position, said catch being formed from a first plate (6) mounted to rotate about an axis (13) opposite the front side (8) of said panel on one of said edges forming a support edge (9), the other of said edges forming a free edge (10), said panel being **characterized in that**:
• a second plate (5) is mounted opposite said first plate on the reverse side (7) of said support edge,
• each of said plates has a peripheral portion (14) in the form of an arc of a circle centered on said axis, the two peripheral portions (14) facing one another when said catch is in the locked position,
• one of said plates (5) is provided with a groove (15) extending along its peripheral portion (14) and the other of said plates (6) is provided with a boss (16) extending along its peripheral portion (14),
• said free edge is provided with a locking impression (18) in the form of an arc of a circle having the same center and radius as the arcs of the circles in which said peripheral portions are inscribed,
• when said catch is brought into the locked position, said impression is held snugly in a close fit between said groove and said boss, so as to prevent said hatch from being unlocked.

2. Panel according to claim 1, **characterized in that** the second plate (5) is fixedly mounted opposite the reverse side (7), its peripheral portion (14) projecting inside the opening (2).

3. Panel according to claim 1, **characterized in that**:
• the first (6) and second (5) plates are fixedly connected to each other by a connecting means (11) passing through an orifice (12) provided in the support edge (9) and centered on the axis (13), so that said second plate rotates with said first plate when the catch (4) is rotated,
• said support edge is provided with a sliding impression (17) in the form of an arc of a circle, the closing of the hatch (3) causing said sliding impression to extend with the locking impression (18) to form an overall impression generally in the form of a circle with the same center and radius as the arcs of a circle in which the peripheral portions (14) are inscribed, so as to allow said catch to rotate to its unlocked position.

4. Panel according to claim 3, **characterized in that** the connecting means (11) is formed either:
• by a harpoon extending from one of the plates (6), said harpoon passing through the orifice (12) and anchoring itself in a housing (20) provided in the other of said plates (5),
• or by a bolt.

5. Panel according to one of claims 3 or 4, **characterized in that** the second plate (5) extends into the opening (2) by a projection (23) when the catch (4) is in the unlocked position, so that the hatch (3) in the closed position leans on said projection to correctly position said catch for its operation in the locked position.

6. Panel according to any of the preceding claims, **characterized in that** the hatch (3) is in the form of a flap mounted for rotation by a hinge (21) to the rest of said panel, at least one catch (4) being disposed along an edge (9) opposite to that supporting said hinge.

7. Panel according to any of the preceding claims, **characterized in that** the first plate (6) is provided with a gripping means to facilitate its manual rotation.

8. Panel according to any of the preceding claims, **characterized in that** one of the edges (9) is provided with a travel limiting boss (25) which, depending on the locked or unlocked position of the catch (4), rests against one end or the other of the peripheral portion (14) of one of the plates (5), so as to limit the rotation of said catch to a half-turn and to impose thereto a direction of operation for locking and unlocking.

9. Panel according to any of the preceding claims, **characterized in that** one of the edges (10) is provided with a locking boss (26) which, before the catch (4) reaches the end of its travel to bring it into the locked position, bears against the outer brink of the peripheral portion (14) of one of the plates (5), said boss fitting into a notch (27) provided on said brink once said catch is brought into the locked position so as to block it in said position.

10. Panel according to any of the preceding claims, **characterized in that** the ends of the peripheral portions (14) of at least one of the plates (5, 6) are bevelled, so as to facilitate the sliding of said plates against the impressions (17, 18) when the catch (4) is actuated.
